# EUROPEAN PATENT APPLICATION

(11) **EP 2 876 927 A1**
(43) Date of publication of application: **27.05.2015**
(21) Application number: 13820418.5
(22) Date of filing: 28.05.2013
(51) Int. Cl.: H04W 28/02, H04W 4/04

(54) **CORE NETWORK NODE, WIRELESS TERMINAL, METHOD FOR CONTROLLING CONGESTION, AND NON-TEMPORARY COMPUTER-READABLE MEDIUM**

(30) Priority: 20.07.2012 JP 2012161408
(71) Applicant: NEC Corporation, Tokyo 108-8001 (JP)
(72) Inventor: IWAI, Takanori, Tokyo 108-8001 (JP); ZEMBUTSU, Hajime, Tokyo 108-8001 (JP)
(74) Representative: Vossius & Partner Patentanwälte Rechtsanwälte mbB
(86) International application number: PCT/JP2013/003363
(87) International publication number: WO 2014/013661

(57) **Abstract**

In one embodiment, a mobile communication system (1) includes a radio access network (20) and a core network (30). The core network includes a core network node (300). The core network node (300) is configured to notify a wireless terminal (10) of a timer value of a Non-Access Stratum (NAS) backoff timer arranged in the wireless terminal (10) to suppress sending of a NAS message. In one embodiment, the timer value is determined based on software information that indicates software installed in the wireless terminal (10) or indicates a version or a revision of the software.

## Description

### Technical Field

The present invention relates to congestion control of a mobile communication system.

### Background Art

A multiple access mobile communication system enables a plurality of wireless terminals to perform wireless communication substantially simultaneously, by sharing radio resources including at least one of time, frequency, and transmission power among the plurality of wireless terminals. Typical examples of multiple access schemes include TDMA (Time Division Multiple Access), FDMA (Frequency Division Multiple Access), CDMA (Code Division Multiple Access), or OFDMA (Orthogonal Frequency Division Multiple Access), and any combination thereof. Unless noted otherwise, the terminology "mobile communication system" used in the specification refers to a multiple access mobile communication system.

A mobile communication system includes a wireless terminal and a network. A network includes a RAN (Radio Access Network) and an MCN (Mobile Core Network). The wireless terminal communicates with an external network (e.g., the Internet, a packet data network, PSTN (Public Switched Telephone Networks)) through the RAN and the MCN.

A RAN includes base stations and a radio resource management function. A radio resource management function may be arranged in an RAN node different from a base station, or may be arranged in a base station. For example, in a UMTS (Universal Mobile Telecommunications System) of 3GPP (3rd Generation Partnership Project), the radio resource management function is arranged in an RNC (Radio Network Controller). Meanwhile, in an EPS (Evolved Packet System) of 3GPP or LTE (Long Term Evolution), the radio resource management function is arranged in a base station (eNB).

An MCN includes one or more transfer nodes that relay traffic, and one or more control nodes that perform mobility management, session management (bearer management), etc. A transfer node function and a control node function may be integrally arranged in one node, for example, as an SGSN (Serving GPRS Support Node) of a PS (Packet Switched) domain and an MSC (Mobile-services Switching Center) of a CS (Circuit Switched) domain of the UMTS. The control node sends and receives NAS (Non-Access Stratum) messages to and from wireless terminals. NAS messages are control messages transparently sent or received between a wireless terminal and an MCN without being terminated in a RAN and without being dependent on a wireless access technology of a RAN. NAS messages sent from a wireless terminal to a MCN include a NAS request message, such as an attach request, a session (bearer) request, and a location update request. For example, in a case of the EPS, NAS request messages from a wireless terminal include at least one of an Attach Request, a Service Request, a PDN connectivity request, a Bearer Resource Allocation Request, a Bearer Resource Modification Request, a TAU (Tracking Area Update) Request, and an RAU (Routing Area Update) Request. Meanwhile, NAS messages sent from an MCN to a wireless terminal include an ACCEPT message and a REJECT message that are replies to NAS request messages.

There has been known NAS-level congestion control for suppressing an overload or congestion of a core network (for example, refer to Non-Patent Literature 1 and Patent Literature 1). Non-Patent Literature 1 discloses APN (Access Point Name)-based session management congestion control and mobility management congestion control, and general NAS-level mobility management congestion control. The APN is an identifier of an external network used in the EPS. The APN-based congestion control is executed to suppress an overload or congestion concerning a particular APN. The general NAS-level mobility management congestion control is executed under a general overload situation not concerning a particular APN. When such NAS-level congestion control is executed, an MME (Mobility Management Entity) rejects a NAS request which is received from the wireless terminal and relates to session management or mobility management. Note that the MME is a control node that is arranged in a core network (an EPC (Evolved Packet Core)) of the EPS. The wireless terminal whose NAS request has been rejected activates a NAS backoff timer and suppresses sending of NAS requests until the NAS backoff timer expires with some exceptions, such as a detach (disconnect of a connection), an emergency call, and a response to a paging. In the EPS, the NAS backoff timer is called a Session Management back-off timer, a Mobility Management back-off timer, or a back-off timer T3346, etc.

A length of a timer value (i.e., a backoff time) of a NAS backoff timer is designated by a core network. For example, a REJECT message, sent to a wireless terminal by a control node (e.g., MME or SGSN) located within the core network to reject a NAS request, includes designation of the backoff timer value. Note that the control node (e.g., MME) must avoid a number of wireless terminals almost simultaneously performing NAS requests postponed by the backoff timer. For that reason, Non-Patent Literature 1 describes that the NAS backoff timer value should be selected so that the postponed NAS requests do not simultaneously occur.

In addition, Non-Patent Literature 1 describes a method to cope with an overload concerning MTC (Machine Type Communication). MTC is also called M2M (Machine-to-Machine) communication or sensor network communication. When MTC is implemented in a mobile communication system, a wireless terminal function is arranged at a machine (e.g., a vending machine, a smart meter, an automobile, a railway vehicle) or a sensor (e.g., sensors relating to environment, agriculture, or transportation). A wireless terminal for MTC is called an MTC device. Non-Patent Literature 1 describes that backoff timer values imposed on MTC devices may be randomized in order to prevent repetition of a load peak due to concentration of communication of the MTC devices. In addition, Non-Patent Literature 1 describes that a wireless terminal for a MTC device may be configured as a low priority terminal, and that a long backoff timer may be imposed on the low priority terminal. Furthermore, Non-Patent Literature 1 describes that the low priority terminal sends a low priority identifier to an MME during a NAS signaling procedure. The low priority identifier is used to decide whether or not the MME accepts the NAS request from the wireless terminal.

Patent Literature 1 discloses MTC congestion control, which includes NAS-level congestion control for blocking communication of a particular MTC application. For example, when receiving a NAS request (e.g., a PDN Connectivity Request or an Attach Request) from an MTC device concerning the particular MTC application, a network node (e.g., an MME or an SGSN) sends a REJECT message including designation of a backoff timer value. The particular MTC application may be identified by an APN or MTC group identifier. In addition, random backoff timer values may be allocated to different MTC devices belonging to the same MTC group in order to prevent increase in a network load when backoff timers of the plurality of MTC devices expire. In addition, Non-Patent Literature 1 describes that a backoff timer value may be sent to a wireless terminal by an ACCEPT message (e.g., an Attach Accept message, an RAU Accept message, or a TAU Accept message) responding to a NAS request from the wireless terminal.

### Citation List

### Patent Literature

[Patent Literature 1] U.S. Patent Application Publication No. 2011/0199905

### Non Patent Literature

[Non-Patent Literature 1] 3GPP TS 23.401 V10.8.0 (2012-06)

### Summary of Invention

### Technical Problem

The present inventor examined in detail a situation in which wireless terminals having different communication amounts, time (delay) tolerance, mobility, etc., such as a smartphone and an MTC device, are accommodated in a mobile communication system. The inventor then has found out various problems on NAS-level congestion control using a NAS backoff timer. A technical idea obtained by the inventor in order to cope with these problems contributes to improvement of the NAS-level congestion control. Some specific examples of the technical idea will be apparent from the following description regarding embodiments and the drawings.

### Solution to Problem

In an aspect, a core network node includes a notification unit configured to notify a wireless terminal of a timer value of a Non-Access Stratum (NAS) backoff timer arranged in the wireless terminal to suppress sending of a NAS request message. The timer value is determined based on software information that indicates software installed in the wireless terminal or indicates a version or a revision of the software.

In an aspect, wireless terminal comprising control unit configured to receive a timer value which is determined based on software information that indicates software installed in the wireless terminal or indicates a version or a revision of the software, set, based on the timer value, a Non-Access Stratum (NAS) backoff timer to suppress sending of a NAS request message, and activate the backoff timer.

In an aspect, a method, for congestion control, including notifying a wireless terminal of a timer value of a Non-Access Stratum (NAS) backoff timer arranged in the wireless terminal to suppress sending of a NAS request message. The timer value is determined based on software information that indicates software installed in the wireless terminal or indicates a version or a revision of the software.

In an aspect, a core network node includes a determination unit and a notification unit. The determination unit is configured to acquire subscriber data of a wireless terminal from a subscriber server, and determine, based on the subscriber data, a timer value of a Non-Access Stratum (NAS) backoff timer arranged in the wireless terminal to suppress sending of a NAS request message. The notification unit is configured to notify the wireless terminal of the timer value.

In an aspect, a wireless terminal includes a control unit configured to receive from the core network node a timer value that is determined based on a subscriber data, set, based on the timer value, a NAS (Non-Access Stratum) backoff timer to suppress sending of a NAS request message, and activate the backoff timer.

In an aspect, a method, for congestion control, includes: acquiring subscriber data of a wireless terminal from a subscriber server, and determining, based on the subscriber data, a timer value of a Non-Access Stratum (NAS) backoff timer arranged in the wireless terminal to suppress sending of a NAS request message; and notifying the wireless terminal of the timer value.

In an aspect, a core network node includes a notification unit configured to notify a wireless terminal of a timer value of a Non-Access Stratum (NAS) backoff timer arranged in the wireless terminal to suppress sending of a NAS request message. The timer value is determined based on an external network with which the wireless terminal communicates through a radio access network and a core network.

In an aspect, a wireless terminal includes a control unit configured to receive a timer value determined according to an external network with which the wireless terminal communicates through a radio access network and a core network, set, based on the timer value, a Non-Access Stratum (NAS) backoff timer to suppress sending of a NAS request message, and activate the backoff timer.

In an aspect, a method, for congestion control, includes notifying a wireless terminal of a timer value of a Non-Access Stratum (NAS) backoff timer arranged in the wireless terminal to suppress sending of a NAS request message. The timer value is determined according to an external network with which the wireless terminal communicates through a radio access network and a core network.

### Advantageous Effects of Invention

The above-mentioned aspects can contribute to the improvement of the NAS-level congestion control.

### Brief Description of Drawings

Fig. 1 is a diagram showing an illustrative configuration of mobile communication systems according to first to third embodiments.
Fig. 2 is a diagram showing an illustrative configuration of mobility management nodes according to the first to third embodiments.
Fig. 3 is a diagram showing an illustrative configuration of wireless terminal according to the first to third embodiments.
Fig. 4 is a flowchart showing an example of a determination procedure of a NAS backoff timer value according to the first embodiment.
Fig. 5 is a sequence diagram showing an example of a congestion control procedure according to the first embodiment.
Fig. 6 is a flowchart showing an example of a determination procedure of a NAS backoff timer value according to the second embodiment.
Fig. 7 is a diagram showing an example of a policy for determining a NAS backoff timer value according to the second embodiment.
Fig. 8 is a sequence diagram showing an example of a congestion control procedure according to the second embodiment.
Fig. 9 is a sequence diagram showing an example of a congestion control procedure according to the second embodiment.
Fig. 10 is a flowchart showing an example of a determination procedure of a NAS backoff timer value according to the third embodiment.
Fig. 11 is a sequence diagram showing an example of a congestion control procedure according to the third embodiment.
Fig. 12 is a sequence diagram showing an example of a congestion control procedure according to the third embodiment.
Fig. 13 is a sequence diagram showing an example of a congestion control procedure according to the third embodiment.

### Description of Embodiments

Hereinafter, specific embodiments will be explained in detail with reference to drawings. In drawings, the same or corresponding elements are denoted by the same reference numerals, and a repeated explanation is omitted as needed for clarity of the explanation.

### First Embodiment

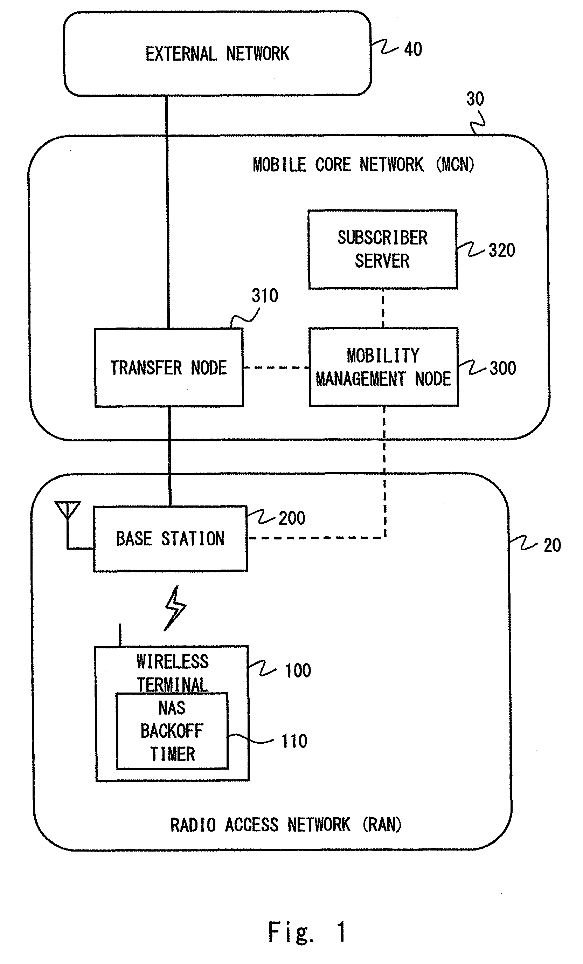

Fig. 1 shows a configuration example of a mobile communication system according to some embodiments including the first embodiment. The mobile communication system includes a RAN (radio access network) 20 and an MCN (mobile core network) 30. The RAN 20 includes a base station 200. The base station 200 is connected to a wireless terminal 100 by a radio access technology. The wireless terminal 100 has a wireless interface, is connected to the base station 200 by the radio access technology, and is connected to the MCN 30 through the RAN 20. Additionally, the wireless terminal 100 communicates with an external network 40 through the RAN 20 and the MCN 30. The external network 40 includes the Internet, a packet data network, or PSTN, or any combination thereof. The RAN 20 includes, for example, a UTRAN (Universal Terrestrial Radio Access Network) or an E-UTRAN (Evolved UTRAN), or a combination thereof. In the UTRAN, the base station 200 corresponds to a NodeB and an RNC. In the E-UTRAN, the base station 200 corresponds to an eNB (E-UTRAN NodeB). Note that although only one wireless terminal 100 and one base station 200 are shown in Fig. 1 for convenience of explanation, the mobile communication system may include a plurality of wireless terminals 100 and a plurality of base stations 200.

The wireless terminal 100 has a NAS backoff timer 110. The NAS backoff timer 110 is used for suppressing sending of a NAS request message from the wireless terminal 100. The wireless terminal 100 activates the NAS backoff timer 110 in response to, for example, receiving from the MCN 30 a REJECT message that is a reply to a NAS request (e.g., an attach request, a connection request, a location update request). The wireless terminal 100 suppresses sending of NAS requests until the NAS backoff timer expires with some exceptions, such as a detach (disconnect of a connection), an emergency call, and a response to a paging. In an EPS, the NAS backoff timer is called a Session Management back-off timer, a Mobility Management back-off timer, or a back-off timer T3346. A method for determining a timer value of the NAS backoff timer 100 will be mentioned later.

The MCN 30 is a network mainly managed by an operator that provides mobile communication services. The MCN 30 includes a CS (Circuit Switched) core or a PS (Packet Switched) core, or a combination thereof. The MCN 30 is, for example, an EPC in the EPS or a GPRS (General Packet Radio Service) packet core in a UMTS, or a combination thereof. In the example shown in Fig. 1, the MCN 30 includes a mobility management node 300, a transfer node 310, and a subscriber server 320.

The transfer node 310 provides a user plane function including circuit switching or transfer of user data transmitted and received between the wireless terminal 100 and the external network 40. For example, in a case of the UMTS, the transfer node 310 includes a user plane function of an MSC, a user plane function of an SGSN, and a GGSN (Gateway GPRS Support Node). Meanwhile, in a case of the EPS, the transfer node 310 includes a Serving Gateway (S-GW) and a PDN Gateway (P-GW).

The subscriber server 320 is a database holding subscriber data of the wireless terminal 100, and the subscriber server 320 is, for example, an HSS (Home Subscriber Server) or an HLR (Home Location Server). The subscriber server 320 sends the subscriber data to the mobility management node 300 in response to a request from the mobility management node 300.

The mobility management node 300 is a control plane node, and performs management regarding the wireless terminal 100 including mobility management (e.g., location registration) and session (bearer) management (e.g., bearer establishment, bearer configuration change, bearer release). The mobility management node 300 sends and receives NAS messages to and from the wireless terminal 100, and indicates the timer value of the NAS backoff timer 110 to the wireless terminal 100. For example, in the case of the UMTS, the mobility management node 300 includes a control plane function of an SGSN. Meanwhile, in the case of the EPS, the mobility management node 300 includes an MME.

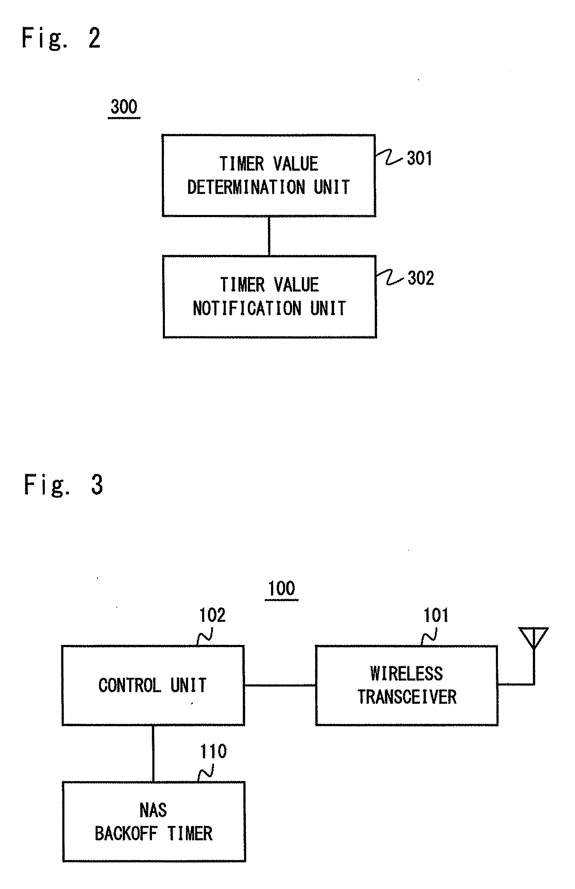

Fig. 2 shows a configuration example of the mobility management node 300 according to some embodiments including the embodiment. In an example of Fig. 2, the mobility management node 300 includes a timer value determination unit 301 and a timer value notification unit 302. The timer value determination unit 301 determines a timer value (i.e., a NAS backoff time) of the NAS backoff timer 110. Note that in some embodiments, the timer value of the NAS backoff timer 100 may be sent from another node, e.g., the subscriber server 320 etc. to the mobility management node 300 (timer value determination unit 301). The timer value notification unit 302 notifies the wireless terminal 100 of the determined timer value. For example, the timer value notification unit 302 transmits an REJECT message (e.g., an Attach Reject message, a Service Reject message, an RAU Reject message, or a TAU Reject message) including the timer value, in rejecting the NAS request from the wireless terminal 100. The timer value notification unit 302 may transmit an ACCEPT message (e.g., an Attach Accept message, a Service Accept message, an RAU Accept message, or a TAU Accept message) including the timer value, in accepting the NAS request from the wireless terminal 100.

Fig. 3 shows a configuration example of the wireless terminal 100 according to some embodiments including the first embodiment. In an example of Fig. 3, the wireless terminal 100 includes a wireless transceiver 101, a control unit 102, and the NAS backoff timer 110. The wireless transceiver 101 has a communication function with the RAN 20, and establishes radio connection with the base station 200. Specifically, the wireless transceiver 101 receives a downlink signal including a plurality of physical downlink channels from the base station 200. In addition, the wireless transceiver 101 transmits an uplink signal including a plurality of physical uplink channels to the base station 200. The control unit 102 sends and receives signaling messages to and from the RAN 20 and the MCN 30 through the wireless transceiver 101, and controls the wireless transceiver 101 for transmission and reception of user data or for a CS call. Furthermore, the control unit 102 receives the timer value of the NAS backoff timer 110 from the mobility management node 300 through the wireless transceiver 101, and sets the NAS backoff timer 110 based on the timer value. The control unit 102 activates (actuates) the NAS backoff timer 110 in response to a predetermined condition, such as when the NAS request is rejected. The control unit 102 suppresses sending of NAS requests, with some exceptions, until the NAS backoff timer 110 expires or a predetermined timer stop condition is satisfied. Some exceptions include, for example, at least one of a detach (disconnect of a connection), an emergency call, and a response to a paging. In the case of the EPS, the NAS request messages to be suppressed may include at least one of a Service Request, a PDN Connectivity Request, a Bearer Resource Allocation Request, a Bearer Resource Modification Request, an Attach Request, and a Tracking Area Update Request.

Hereinafter, there will be explained determination of a NAS backoff time (a timer value of the NAS backoff timer 110) according to the first embodiment. In this embodiment, the mobility management node 300 determines the NAS backoff time (timer value of the NAS backoff timer 110) imposed on the wireless terminal 100 based on software information that indicates software installed in the wireless terminal 100 or indicates a version or a revision of the software. The software information may be sent from the wireless terminal 100 to the MCN 30 at the time of attach or location update of the wireless terminal 100. Alternatively, the software information may be sent from the subscriber server 320 to the mobility management node 300. In some implementations, the software information may be included as a part of identification information of the wireless terminal 100. The software information may be a 2-digit SVN (Software Version Number) contained in an IMEISV (International Mobile Equipment Identity Software Version). The SVN is a code for indicating the revision of software installed in the wireless terminal 100.

The mobility management node 300 may determine the NAS backoff time (timer value of the NAS backoff timer 110) imposed on the wireless terminal 100 in accordance with a determination policy associated with the software information of the wireless terminal 100. That is, the determination policy to determine the NAS backoff time is changed based on the software information of the wireless terminal 100, and thus the NAS backoff time according to the software information of the wireless terminal 100 is eventually determined. In other words, it can be said that the software information of the wireless terminal 100 is associated with the determination policy to determine the NAS backoff time. It can be also said that the software information of the wireless terminal 100 indicates the determination policy for determining the NAS backoff time.

The mobility management node 300 may decide itself the determination policy of the NAS backoff time corresponding to the software information, or may receive the determination policy associated with the software information of the wireless terminal 100 from another node (e.g., the subscriber server 320). The determination policy to determine the NAS backoff time may prescribe a length of the NAS backoff time and whether the NAS backoff time is fixed or random. Candidates of the determination policy to determine the NAS backoff time may include variations, such as (a) the NAS backoff time is set to be a first fixed position (e.g., 10 minutes), (b) the NAS backoff time is set to be a second fixed position (e.g., 30 minutes), (c) the NAS backoff time is randomly determined from 10 to 30 minutes, and (d) the NAS backoff time is randomly determined from 30 to 100 minutes. The mobility management node 300 may select one determination policy from these determination policy candidates of the NAS backoff time based on the software information of the wireless terminal 100.

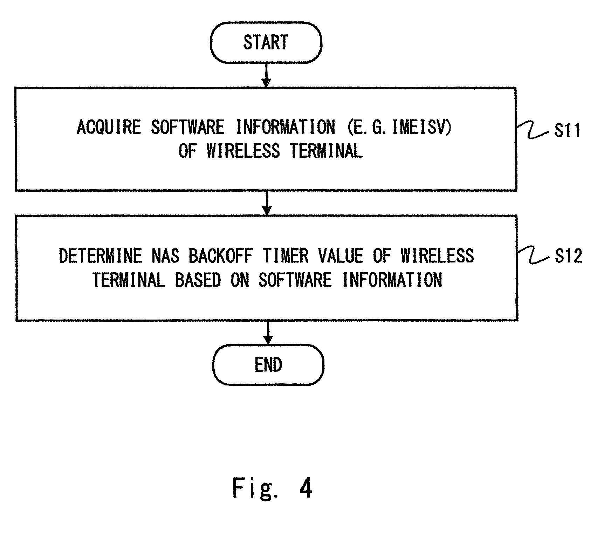

Fig. 4 is a flowchart showing one example of a determination procedure of the NAS backoff time (timer value of the NAS backoff timer 110) according to the first embodiment. In step S11, the mobility management node 300 (timer value determination unit 301) acquires software information of the wireless terminal 100. In step S12, the mobility management node 300 (timer value determination unit 301) determines the NAS backoff timer value imposed on the wireless terminal 100 based on the software information of the wireless terminal 100.

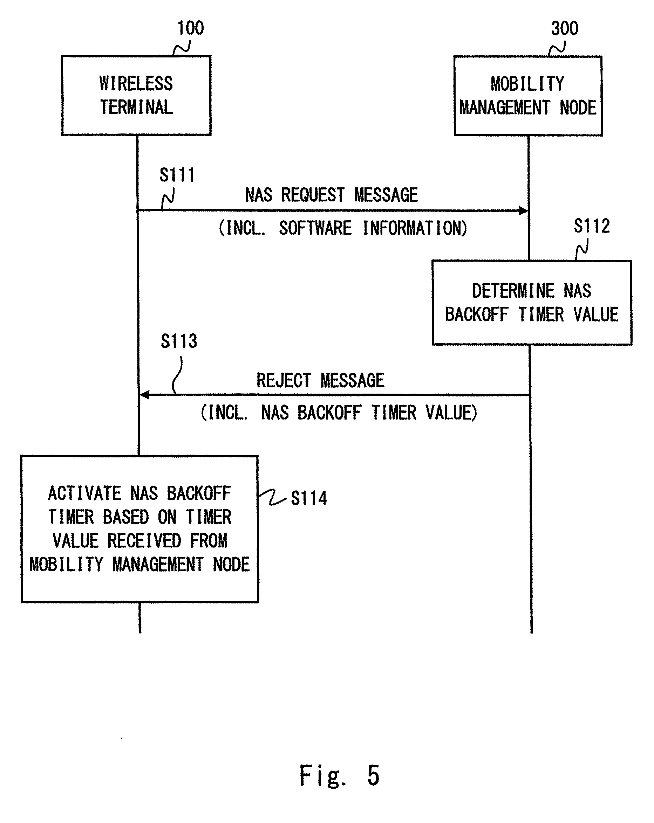

Fig. 5 is a sequence diagram showing one example of a NAS-level congestion control procedure according to the first embodiment. In the example shown in Fig. 5, the NAS request from the wireless terminal 100 triggers the mobility management node 300 to acquire the software information of the wireless terminal 100. In step S111, the wireless terminal 100 sends to the mobility management node 300 a NAS request message including the software information of the wireless terminal 100. This NAS request message is, for example, an attach request, a location update request (e.g., a TAU Request, an RAU Request), or a service request.

In step S112, the mobility management node 300 determines the NAS backoff timer value of the wireless terminal 100 based on the software information of the wireless terminal 100. In step S113, the mobility management node 300 sends a NAS REJECT message to the wireless terminal 100 on the ground of an overload or congestion of the core network 30. The REJECT message of step S113 indicates rejection of the NAS request of step S111, and includes the NAS backoff timer value.

In step S 114, the wireless terminal 100 sets the NAS backoff timer 110 based on the timer value received from the mobility management node 300, and activates the timer 110. Note that in step S114, the wireless terminal 100 may determine a randomized timer value using the timer value received from the mobility management node 300 as a parameter (e.g., an upper-limit value).

As mentioned above, in this embodiment, the NAS backoff time (timer value of the NAS backoff timer 110) imposed on the wireless terminal 100 is determined based on the software information that indicates software installed in the wireless terminal 100 or indicates version or revision of the software. Accordingly, in this embodiment, NAS-level congestion control according to software installed in the wireless terminal 100 can be performed. For example, there is a case where wireless terminals manufactured by the same manufacturer or wireless terminals of the same model are used for a plurality of applications, and where they are different in communication amounts, time (delay) tolerance, or priority, etc. depending on the applications. In this case, there is a possibility that a communication amount, time (delay) tolerance, or priority of the wireless terminal 100 cannot be specified only by referring to hardware identification information (e.g., IMEI) of the wireless terminal 100. In contrast with this, in the embodiment, for example, communication amount, time (delay) tolerance, or priority of the wireless terminal 100 can be determined based on the software information of the wireless terminal 100. In the embodiment, even in the case where wireless terminals manufactured by the same manufacturer or wireless terminals of the same model are used for a plurality of applications, an appropriate NAS backoff time according to the application of the wireless terminal 100 can be determined accordingly. Consequently, the embodiment can contribute to improvement of the NAS-level congestion control.

In addition, in one of specific examples of the embodiment, an SVN (Software Version Number) contained in as IMEISV is used as one of the software information. The IMEI is a fixed code defined by the hardware of the wireless terminal 100, while the SVN is configurable. Accordingly, a mobile operator or a manufacturer of the wireless terminal 100, for example, can set the SVN after shipping the wireless terminal 100. For this reason, by utilizing the SVN, a particular terminal group (e.g., low priority terminals) can be easily designated, and a PA unique to the particular terminal group can be easily determined.

### Second Embodiment

In this embodiment, configurations of a mobile communication system, the mobility management node 300 and the wireless terminal 100 may be the same as those of the examples shown in Figs. 1 to 3. In the embodiment, the mobility management node 300 (timer value determination unit 301) is configured to acquire subscriber data of the wireless terminal 100 from the subscriber server 320 and determine a NAS backoff time (a timer value of the NAS backoff timer 110) imposed on the wireless terminal 100 based on the subscriber data. In other words, the mobility management node 300 operates to determine the NAS backoff time imposed on the wireless terminal 100 not in accordance with information received from the wireless terminal 100 but in accordance with information (e.g., priority information, timer determination policy) included in the subscriber data.

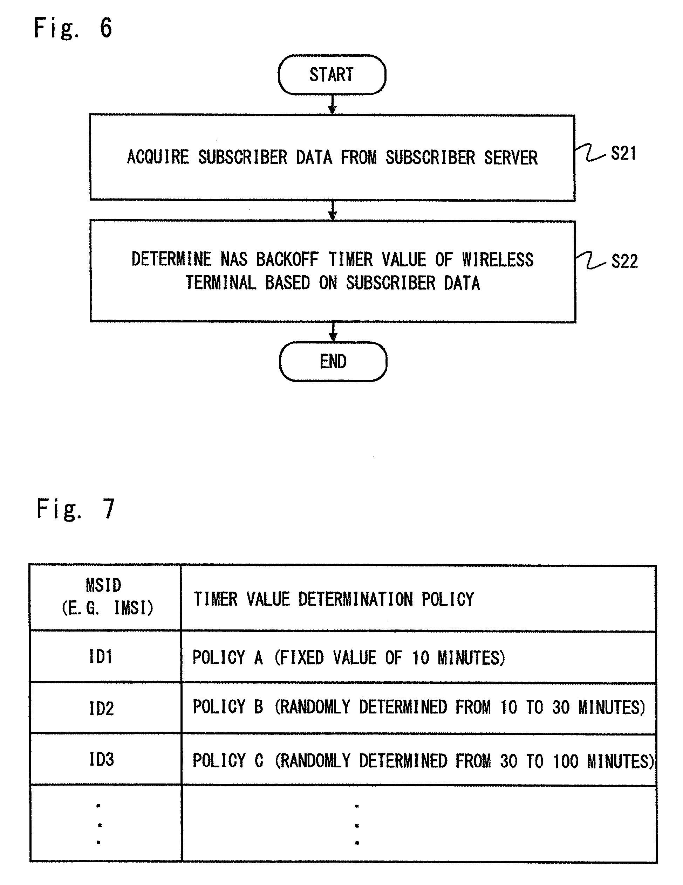

Fig. 6 is a flowchart showing one example of a determination procedure of the NAS backoff time (timer value of the NAS backoff timer 110) according to the embodiment. In step S21, the mobility management node 300 (timer value determination unit 301) acquires the subscriber data of the wireless terminal 100 from the subscriber server 320. In step S22, the mobility management node 300 (timer value determination unit 301) determines an NA backoff timer value imposed on the wireless terminal 100 based on the subscriber data of the wireless terminal 100.

The subscriber data may include priority information indicating a priority level of the wireless terminal 100. The priority information may be flag information that directly explicitly indicates whether or not the wireless terminal 100 has low priority. Note that since the priority level is utilized for the determination of the NAS backoff time in the embodiment, the priority level may be related to time tolerance of the wireless terminal 100. In other words, a delay-tolerant wireless terminal may be assigned lower priority than a terminal that performs non-delay-tolerant communication. The mobility management node 300 may determine a longer value as the NAS backoff timer value if determining that the wireless terminal 100 has low priority, compared with a case of determining not. For example, the priority information may indicate whether or not the wireless terminal 100 is associated with particular MTC (Machine Type Communication) that allows delay. In this case, the priority information may be type (model) information of the wireless terminal 100. The type information of the wireless terminal 100 may be given based on a difference in devices in which the wireless terminal 100 is mounted, such as a common mobile terminal (e.g., a mobile phone, a smartphone, and a tablet computer), an automobile, a railway vehicle, and a vending machine. The difference in devices in which the wireless terminal 100 is mounted implicitly indicates a difference in time tolerance.

Further or alternatively, the subscriber data may include policy information indicating the determination policy to determine the NAS backoff time. In this case, the mobility management node 300 may determine the NAS backoff time (timer value of the NAS backoff timer 110) imposed on the wireless terminal 100 in accordance with the determination policy designated by the subscriber data of the wireless terminal 100. Fig. 7 shows a specific example of the determination policy (policy information) held by the subscriber server 320. As shown in Fig. 7, the subscriber server 320 may associate mobility types of a plurality of wireless terminals 100 with their respective wireless terminal identifiers (MSIDs). The MSID may be called a subscriber identifier. The MSID is, for example, an IMSI (International Mobile Subscriber Identity). Three kinds of determination policies of types A to C are shown in Fig. 7. The type A indicates that a backoff timer value is set to be a fixed value (e.g., 30 minutes). The type B indicates that the backoff timer value is randomly determined in a first time range (e.g., 10 to 30 minutes). The type C indicates that the backoff timer value is randomly determined in a second time range (e.g., 30 to 100 minutes).

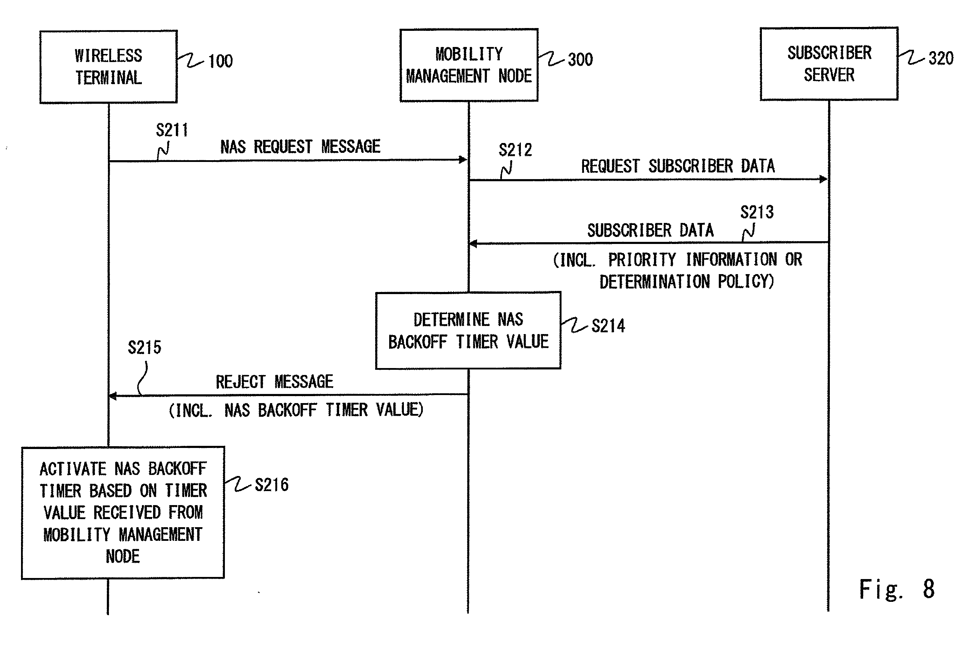

Fig. 8 is a sequence diagram showing one example of a NAS-level congestion control procedure according to the second embodiment. Fig. 8 shows a procedure in which the mobility management node 300 acquires subscriber data at the time of receiving a NAS request (e.g., the attach request or the location update request) from the wireless terminal 100. In step S211, the wireless terminal 100 sends a NAS request message to the mobility management node 300. In step S212, in response to reception of the NAS request message, the mobility management node 300 requests the subscriber server 320 to send the subscriber data of the wireless terminal 100. The request transmitted in step S212 includes the MSID (i.e., an ID managed by the subscriber server 320, for example, the IMSI) of the wireless terminal 100. In step S213, the mobility management node 300 receives the subscriber data of the wireless terminal 100 from the subscriber server 320. This subscriber data, for example, includes the priority information of the wireless terminal 100, or the determination policy to determine the NAS backoff time applied to the wireless terminal 100.

In step S214, the mobility management node 300 determines the NAS backoff timer value of the wireless terminal 100 based on the subscriber data (e. g the priority information or the determination policy) of the wireless terminal 100. In step S215, the mobility management node 300 sends a NAS REJECT message to the wireless terminal 100 on the ground of an overload or congestion of the core network 30. The REJECT message of step S215 indicates rejection of the NAS request of step S211, and includes the NAS backoff timer value.

In step S216, the wireless terminal 100 sets the NAS backoff timer 110 based on the timer value received form the mobility management node 300, and activates the timer 110. Note that in step S216, the wireless terminal 100 may determine a randomized timer value using the timer value received from the mobility management node 300 as a parameter (e.g., an upper-limit value).

Note that for example, the mobility management node 300 may acquire the subscriber data of the wireless terminal 100 from an old mobility management node, instead of the subscriber server 320, in response to receiving a location update request from the wireless terminal 100. In this case, the mobility management node 300 does not need to request transmission of the subscriber data from the subscriber server 320. Note that the old mobility management node is a mobility management node that manages a location registration area where the wireless terminal 100 was located in the past, and holds the subscriber data received from the subscriber server 320 at the time of attach of the wireless terminal 100.

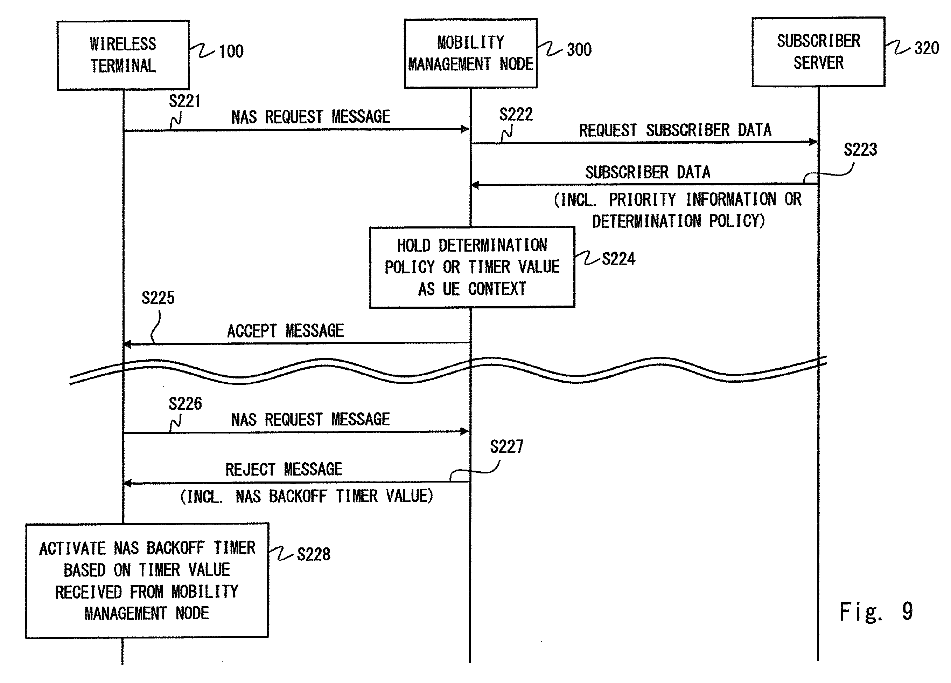

Fig. 9 is a sequence diagram showing another example of the NAS-level congestion control procedure according to the embodiment. Processing in steps S221 to S223 is similar to processing in steps S211 to S213 of Fig. 8. In step S224, the mobility management node 300 holds the NAS backoff timer value or the timer determination policy determined based on the subscriber data of the wireless terminal 100 as a context (e.g., a UE CONTEXT) regarding the wireless terminal 100. In step S225, the mobility management node 300 sends an ACCEPT message with respect to the NAS request message of step S221.

In step S226, the wireless terminal 100 sends a NAS request message to the mobility management node 300. In step S227, the mobility management node 300 sends a NAS REJECT message to the wireless terminal 100 on the ground of an overload or congestion of the core network 30. The REJECT message of step S227 indicates rejection of the NAS request of step S227, and includes a NAS backoff timer value based on the NAS backoff timer value or the determination policy determined in step S224. In step S228, the wireless terminal 100 sets the NAS backoff timer 110 based on the timer value received from the mobility management node 300, and activates the timer 110.

As mentioned above, in the second embodiment, the NAS backoff timer value imposed on the wireless terminal 100 is determined based on the subscriber data of the wireless terminal 100. There is an advantage in the embodiment that a mechanism for determining different NAS backoff timer values for a plurality of wireless terminals 100 is introduced by coping (improvement) of the core network 30, and thereby an impact given to the wireless terminal 100 is small. In addition, there is a case where wireless terminals manufactured by the same manufacturer, wireless terminals of the same model, or wireless terminals of the same software version (revision) are used for a plurality of applications, and where they are different in communication amounts, time (delay) tolerance, or priority, etc. depending on the applications. In this case, in the embodiment, the NAS backoff timer value different for each wireless terminal 100 can be determined by using the setting of the subscriber data.

Furthermore, the subscriber data can be changed by the mobile operator for his own convenience and, for example, can be also temporarily changed. For this reason, in the embodiment, dynamic or temporary change of the NAS backoff time applied to the wireless terminal 100 or the determination policy to determine the NAS backoff time can be easily made compared with the case of using information received from the wireless terminals 100, such as the software information, mentioned in the first embodiment.

### Third Embodiment

In this embodiment, configurations of a mobile communication system, the mobility management node 300, and the wireless terminal 100 may be the same as those of the examples shown in Figs. 1 to 3. In the embodiment, the mobility management node 300 (timer value determination unit 301) is configured to determine a NAS backoff time (a timer value of the NAS backoff timer 110) imposed on the wireless terminal 100 based on the external network 40 with which the wireless terminal 100 communicates through the RAN 20 and the MCN 30. In other words, the mobility management node 300 (timer value determination unit 301) is configured to change the NAS backoff time (timer value of the NAS backoff timer 110) imposed on the wireless terminal 100 according to which external network 40 the wireless terminal 100 communicates with. The mobility management node 300 may acquire, from the wireless terminal 100 or the subscriber server 320, identification information (e.g., an APN) of the external network 40 with which the wireless terminal 100 communicates.

For example, when the identification information (e.g., the APN) of the external network 40 indicates a network for low priority communication, the mobility management node 300 may impose a longer NAS backoff time on the wireless terminal 100, compared with the case where the identification information does not. The network for low priority communication is, for example, a network for particular time-tolerant MTC service that allows delay. The particular time-tolerant MTC service is, for example, smart metering. Meanwhile, when the identification information (e.g., the APN) of the external network 40 indicates a network for high priority communication, the mobility management node 300 may impose a shorter NAS backoff time on the wireless terminal 100, than otherwise.

The mobility management node 300 may determine the NAS backoff time (timer value of the NAS backoff timer 110) imposed on the wireless terminal 100 in accordance with a determination policy associated with the external network 40 with which the wireless terminal 100 communicates. That is, the determination policy to determine the NAS backoff time is changed based on the external network 40 with which the wireless terminal 100 communicates, and the NAS backoff time according to the external network 40 is determined accordingly. In other words, it can be said that the external network 40 with which the wireless terminal 100 communicates is associated with the determination policy to determine the NAS backoff time. It can be also said that the identification information (e.g., the APN) of the external network 40 with which the wireless terminal 100 communicates indicates the determination policy to determine the NAS backoff time.

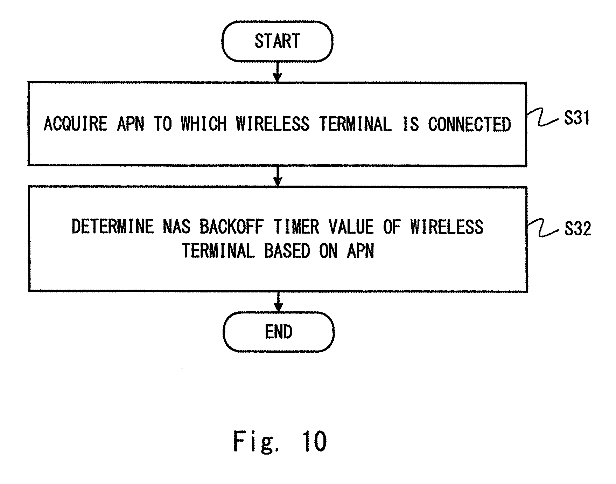

Fig. 10 is a flowchart showing one example of a determination procedure of the NAS backoff time (timer value of the NAS backoff timer 110) according to the embodiment. In step S31, the mobility management node 300 (timer value determination unit 301) acquires the identification information (e.g., the APN) of the external network 40 with which the wireless terminal 100 communicates. In step S32, the mobility management node 300 (timer value determination unit 301) determines the NAS backoff timer value imposed on the wireless terminal 100 based on the identification information (e.g., the APN) of the external network 40.

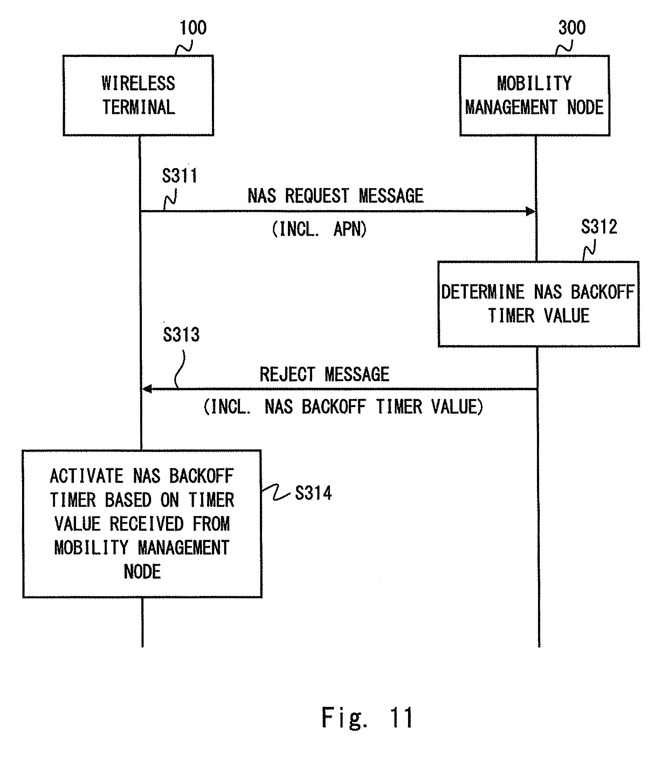

Fig. 11 is a sequence diagram showing a first example of a NAS-level congestion control procedure according to the embodiment. In an example of Fig. 11, the mobility management node 300 receives the identification information of the external network 40 from the wireless terminal 100. Specifically, in step S311, the wireless terminal 100 sends to the mobility management node 300 a NAS request message including the identification information (e.g., the APN) of the external network 40. This NAS request message is, for example, an attach request, a location update request (e.g., a TAU Request, an RAU Request), a connection request, or a service request.

In step S312, the mobility management node 300 determines the NAS backoff timer value of the wireless terminal 100 based on the identification information of the external network 40 with which the wireless terminal 100 communicates. In step S313, the mobility management node 300 sends a NAS REJECT message to the wireless terminal 100 on the ground of an overload or congestion of the core network 30. A REJECT message of step S313 indicates rejection of the NAS request of step S311, and includes the NAS backoff timer value.

In step S314, the wireless terminal 100 sets the NAS backoff timer 110 based on the timer value received from the mobility management node 300, and activates the timer 110. Note that in step S314, the wireless terminal 100 may determine a randomized timer value using the timer value received from the mobility management node 300 as a parameter (e.g., an upper-limit value).

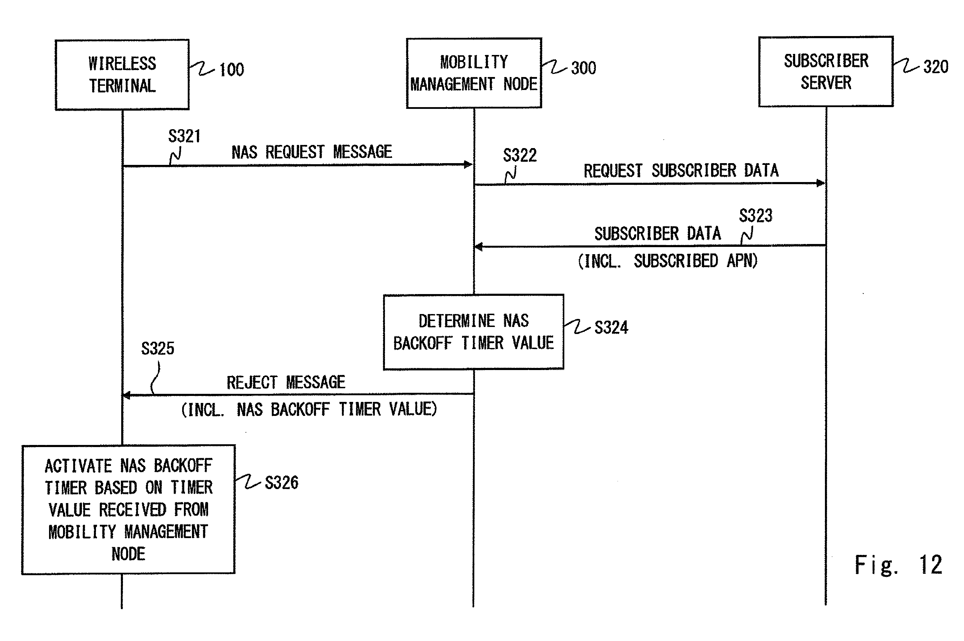

Fig. 12 is a sequence diagram showing a second example of the NAS-level congestion control procedure according to the embodiment. In an example of Fig. 12, the mobility management node 300 acquires, from the subscriber server 320, the identification information (e.g., the APN) of the external network 40 with which the wireless terminal 100 communicates. The procedure of Fig. 12 is similar to the procedure shown in Fig. 8 except that subscriber data in step S323 includes the identification information (e.g., a subscribed APN) of the external network 40. Specifically, in steps S321 to S323, the mobility management node 300 receives a NAS request from the wireless terminal 100, requests the subscriber server 320 to send the subscriber data, and receives the subscriber data from the subscriber server 320. This subscriber data includes the identification information (e.g., the subscribed APN) of the external network 40 with which the wireless terminal 100 communicates.

In step S324, the mobility management node 300 determines the NAS backoff timer value of the wireless terminal 100 based on the identification information of the external network 40 with which the wireless terminal 100 communicates. Processing in steps S325 to S326 may be similar to that in steps S215 to S216 of Fig. 8.

Note that, for example, the mobility management node 300 may acquire the subscriber data of the wireless terminal 100 from an old mobility management node, instead of the subscriber server 320, in response to receiving a location update request from the wireless terminal 100. In this case, the mobility management node 300 does not need to request the transmission of the subscriber data from the subscriber server 320.

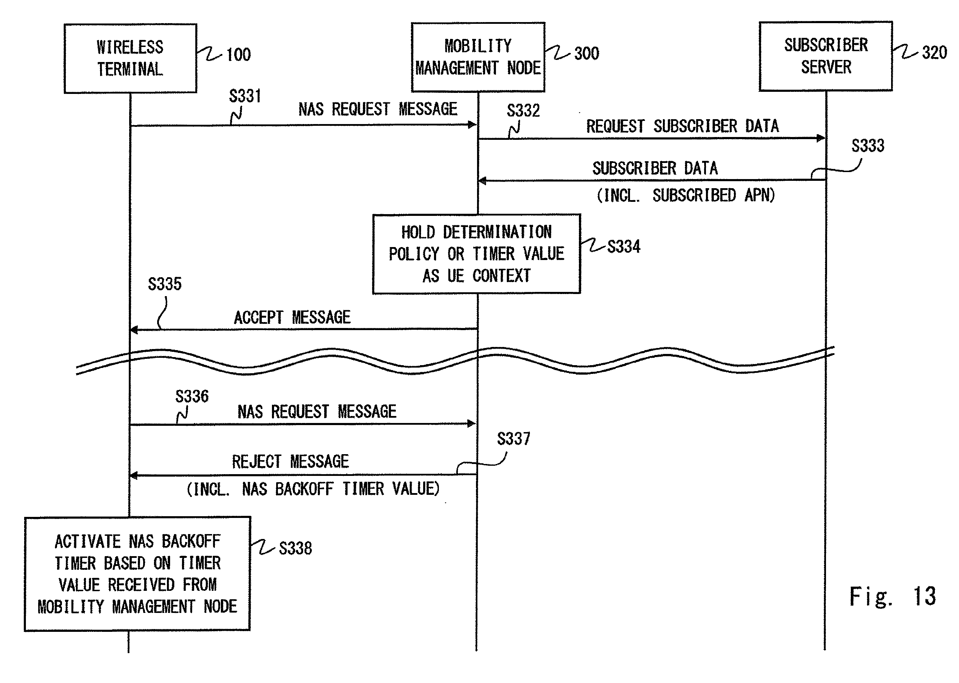

Fig. 13 is a sequence diagram showing a third example of the NAS-level congestion control procedure according to the embodiment. Fig. 13, similarly to Fig. 9, shows a case where the mobility management node 300 rejects a NAS request after receiving another NAS request. Processing in steps S331 to S333 is similar to processing in steps S321 to S323 of Fig. 12. In step S334, the mobility management node 300 holds the NAS backoff timer value or the timer determination policy determined based on the identification information of the external network 40 with which the wireless terminal 100 communicates, as a context (e.g., the UE CONTEXT) regarding the wireless terminal 100. In step S335, the mobility management node 300 sends an ACCEPT message with respect to a NAS request message of step S331. Processing in subsequent steps S336 to S338 may be similar to that in steps S226 to S228 shown in Fig. 9.

As mentioned above, in the embodiment, the NAS backoff time (timer value of the NAS backoff timer 110) imposed on the wireless terminal 100 is determined based on the external network 40 with which the wireless terminal 100 communicates. Determining the NAS backoff time according to the external network 40 is particularly effective in a case where the external network 40 has an association with a communication amount, time (delay) tolerance or priority, etc. of the wireless terminal 100. The external network 40 with which the wireless terminal 100 communicates is determined according to a contract with the mobile operator or according to service utilized by the wireless terminal 100. Accordingly, in some implementations, the wireless terminal 100 that is used for particular MTC service is considered to communicate with the external network 40 exclusively for this MTC service. In this case, the mobility management node 300 can judge the time tolerance or the priority level of the wireless terminal 100 according to the external network 40 with which the wireless terminal 100 communicates, and thus can determine an appropriate NAS backoff time according to the time tolerance or the priority level.

### Other Embodiments

The above-mentioned first to third embodiments may be appropriately combined.

In the first to third embodiments, the examples have been shown where the mobility management node 300 determines the NAS backoff timer value. However, determination of the NAS backoff timer value may be made by a node different from the mobility management node 300. For example, the determination of the NAS backoff timer value may be made by a network node different from the mobility management node 300 (e.g., the subscriber server 320) or a network management system arranged in the core network 30. The network management system may be called an OAM (Operation Administration and Maintenance) server, an OMC (Operation and Maintenance Centre), an NM (Network Manager), or an EM (Element Manager). In this case, the mobility management node 300 may receive the NAS backoff timer value of the wireless terminal 100 from another network node or a network management system, and may send the backoff timer value to the wireless terminal 100.

The processing for determining a NAS backoff timer value described in the first to third embodiments may be implemented by using a semiconductor processing device including an ASIC (Application Specific Integrated Circuit). Further, the processing may be implemented by causing a computer system including at least one processor (e.g., a microprocessor, an MPU or a DSP (Digital Signal Processor)) to execute a program. More specifically, one or more programs including instructions for causing a computer system to perform the algorithms for determining a NAS backoff timer value described with reference to the flowcharts and sequence diagrams may be created and supplied to a computer system. The processing for setting and activation of the NAS backoff timer 110 performed by the wireless terminal 100 may also be implemented by causing a computer system to execute a program.

These programs can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g., magneto-optical disks), CD-ROM (Read Only Memory), CD-R, CD-R/W, and semiconductor memories (such as mask ROM, PROM (Programmable ROM), EPROM (Erasable PROM), flash ROM, RAM (random access memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g., electric wires, and optical fibers) or a wireless communication line.

Furthermore, the embodiments stated above are merely examples of application of the technical ideas obtained by the present inventor. Needless to say, these technical ideas are not limited to those described in the above embodiments and the reference embodiment, and may be changed in various ways.

For example, the whole or part of the illustrative embodiments disclosed above can be described as, but not limited to, the following supplementary notes.

### (Supplementary Note A1)

A core network node including a notification unit that notifies a wireless terminal of a timer value of a Non-Access Stratum (NAS) backoff timer arranged in the wireless terminal to suppress sending of a NAS request message,
in which the timer value is determined based on software information that indicates software installed in the wireless terminal or indicates a version or a revision of the software.

### (Supplementary Note A2)

The core network node described in Supplementary Note A1, in which the software information is sent from the wireless terminal to a core network.

### (Supplementary Note A3)

The core network node described in Supplementary Note A1 or A2, in which the software information includes a Software Version Number (SVN) contained in an International Mobile Equipment Identity Software Version (IMEISV).

### (Supplementary Note A4)

The core network node described in any one of Supplementary Notes A1 to A3, in which the timer value is determined in accordance with a determination policy associated with the software information.

### (Supplementary Note A5)

The core network node described in Supplementary Note A4, in which the determination policy is selected from a plurality of policies including a first policy in which the timer value is set to be a predetermined fixed value and a second policy in which the timer value is randomly determined.

### (Supplementary Note A6)

The core network node described in any one of Supplementary Notes A1 to A5, in which the NAS request message includes at least one of a Service Request, a PDN Connectivity Request, a Bearer Resource Allocation Request, a Bearer Resource Modification Request, an Attach Request, and a Tracking Area Update Request.

### (Supplementary Note A7)

A wireless terminal comprising control unit that receives a timer value which is determined based on software information that indicates software installed in the wireless terminal or indicates a version or a revision of the software, sets, based on the timer value, a Non-Access Stratum (NAS) backoff timer to suppress sending of a NAS request message, and activates the backoff timer.

### (Supplementary Note A8)

The wireless terminal described in Supplementary Note A7, in which the software information is sent from the wireless terminal to a core network.

### (Supplementary Note A9)

The wireless terminal described in Supplementary Note A7 or A8, in which the software information includes a Software Version Number, SVN, contained in an International Mobile Equipment Identity Software Version, IMEISV.

### (Supplementary Note A10)

The wireless terminal described in any one of Supplementary Notes A7 to A9, in which the NAS request message includes at least one of a Service Request, a PDN Connectivity Request, a Bearer Resource Allocation Request, a Bearer Resource Modification Request, an Attach Request, and a Tracking Area Update Request.

### (Supplementary Note A11)

A method for congestion control, including notifying a wireless terminal of a timer value of a Non-Access Stratum (NAS) backoff timer arranged in the wireless terminal to suppress sending of a NAS request message,
in which the timer value is determined based on software information that indicates software installed in the wireless terminal or indicates a version or a revision of the software.

### (Supplementary Note A12)

The method described in Supplementary Note A11, in which the software information is sent from the wireless terminal to a core network.

### (Supplementary Note A13)

The method described in Supplementary Note A11 or A12, in which the software information includes a Software Version Number (SVN) contained in an International Mobile Equipment Identity Software Version (IMEISV).

### (Supplementary Note A14)

The method described in any one of Supplementary Notes A11 to A13, in which the timer value is determined in accordance with a determination policy associated with the software information.

### (Supplementary Note A 15)

The method described in Supplementary Note A14, in which the determination policy is selected from a plurality of policies including a first policy in which the timer value is set to be a predetermined fixed value and a second policy in which the timer value is randomly determined.

### (Supplementary Note A16)

A program for causing a computer to perform a method for congestion control, in which
the method includes notifying a wireless terminal of a timer value of a Non-Access Stratum, NAS, backoff timer arranged in the wireless terminal to suppress sending of a NAS request message, and
the timer value is determined based on software information that indicates software installed in the wireless terminal or indicates a version or a revision of the software.

### (Supplementary Note B1)

A core network node including:
a determination unit that acquires subscriber data of a wireless terminal from a subscriber server, and determines, based on the subscriber data, a timer value of a Non-Access Stratum (NAS) backoff timer arranged in the wireless terminal to suppress sending of a NAS request message; and
a notification unit that notifies the wireless terminal of the timer value.

### (Supplementary Note B2)

The core network node described in Supplementary Note B1, in which the subscriber data includes priority information indicating whether or not the wireless terminal has low priority.

### (Supplementary Note B3)

The core network node described in Supplementary Note B2, in which the determination unit determines a longer value as the timer value if the wireless terminal is determined to have the low priority, compared with a case where the wireless terminal is determined not.

### (Supplementary Note B4)

The core network node described in Supplementary Note B2 or B3, in which the priority information indicates whether or not the wireless terminal is associated with Machine Type Communication (MTC).

### (Supplementary Note B5)

The core network node described in Supplementary Note B1, in which the subscriber data includes a determination policy to determine the timer value.

### (Supplementary Note B6)

The core network node described in Supplementary Note B5, in which the determination unit determines the timer value in accordance with the determination policy.

### (Supplementary Note B7)

The core network node described in Supplementary Note B5 or B6, in which the determination policy is selected from a plurality of policies including a first policy in which the timer value is set to be a predetermined fixed value and a second policy in which the timer value is randomly determined, and the determination policy is held by the subscriber server so as to be associated with the wireless terminal.

### (Supplementary Note B8)

The core network node described in any one of Supplementary Notes B1 to B7, in which the NAS request message includes at least one of a Service Request, a PDN Connectivity Request, a Bearer Resource Allocation Request, a Bearer Resource Modification Request, an Attach Request, and a Tracking Area Update Request.

### (Supplementary Note B9)

A wireless terminal including a control unit that receives a timer value from the core network node described in any one of Supplementary Notes B1 to B8, sets, based on the timer value, a NAS (Non-Access Stratum) backoff timer to suppress sending of a NAS request message, and activates the backoff timer.

### (Supplementary Note B10)

A method for congestion control, including:
acquiring subscriber data of a wireless terminal from a subscriber server, and determining, based on the subscriber data, a timer value of a Non-Access Stratum (NAS) backoff timer arranged in the wireless terminal to suppress sending of a NAS request message; and
notifying the wireless terminal of the timer value.

### (Supplementary Note B11)

The method described in Supplementary Note B10, in which the subscriber data includes priority information indicating whether or not the wireless terminal has low priority.

### (Supplementary Note B12)

The method described in Supplementary Note B11, in which the determination unit determines a longer first value as the timer value if the wireless terminal is determined to have the low priority, compared with a case where the wireless terminal is determined not.

### (Supplementary Note B13)

The method described in Supplementary Note B11 or B12, in which the priority information indicates whether or not the wireless terminal is associated with Machine Type Communication (MTC).

### (Supplementary Note B 14)

The method described in Supplementary Note B10, in which the subscriber data includes a determination policy to determine the timer value.

### (Supplementary Note B15)

The method described in Supplementary Note B14, in which the determining includes determining the timer value in accordance with the determination policy.

### (Supplementary Note B16)

The method described in Supplementary Note B14 or B15, in which the determination policy is selected from a plurality of policies including a first policy in which the timer value is set to be a predetermined fixed value and a second policy in which the timer value is randomly determined, and the determination policy is held by the subscriber server so as to be associated with the wireless terminal.

### (Supplementary Note B 17)

A program for causing a computer to perform a method for congestion control, in which
the method includes:
acquiring subscriber data of a wireless terminal from a subscriber server, and determining, based on the subscriber data, a timer value of a Non-Access Stratum (NAS) backoff timer arranged in the wireless terminal to suppress sending of a NAS request message; and
notifying the wireless terminal of the timer value.

### (Supplementary Note C1)

A core network node including a notification unit that notifies a wireless terminal of a timer value of a Non-Access Stratum (NAS) backoff timer arranged in the wireless terminal to suppress sending of a NAS request message, in which
the timer value is determined based on an external network with which the wireless terminal communicates through an radio access network and a core network.

### (Supplementary Note C2)

The core network node described in Supplementary Note C1, in which the timer value is determined to be a longer value in a case where the external network is a first network for low priority, compared with a case where the external network is not.

### (Supplementary Note C3)

The core network node described in Supplementary Note C2, in which the first network is a network associated with Machine Type Communication (MTC).

### (Supplementary Note C4)

The core network node described in any one of Supplementary Notes C1 to C3, in which the timer value is determined in accordance with a determination policy associated with the external network.

### (Supplementary Note C5)

The core network node described in Supplementary Note C4, in which the determination policy is selected from a plurality of policies including a first policy in which the timer value is set to be a predetermined fixed value and a second policy in which the timer value is randomly determined.

### (Supplementary Note C6)

The core network node described in any one of Supplementary Notes C1 to C5, in which the NAS request message includes at least one of a Service Request, a PDN Connectivity Request, a Bearer Resource Allocation Request, a Bearer Resource Modification Request, an Attach Request, and a Tracking Area Update Request.

### (Supplementary Note C7)

A wireless terminal including a control unit that receives a timer value determined according to an external network with which the wireless terminal communicates through a radio access network and a core network, sets, based on the timer value, a Non-Access Stratum (NAS) backoff timer to suppress sending of a NAS request message, and activates the backoff timer.

### (Supplementary Note C8)

The wireless terminal described in Supplementary Note C7, in which the timer value is determined to be a longer value in a case where the external network is a first network for low priority, compared with a case where the external network is not.

### (Supplementary Note C9)

The wireless terminal described in Supplementary Note C8, in which the first network is a network associated with Machine Type Communication (MTC).

### (Supplementary Note C10)

The wireless terminal described in any one of Supplementary Notes C7 to C9, in which the NAS request message includes at least one of a Service Request, a PDN Connectivity Request, a Bearer Resource Allocation Request, a Bearer Resource Modification Request, an Attach Request, and a Tracking Area Update Request.

### (Supplementary Note C11)

A method for congestion control, including notifying a wireless terminal of a timer value of a Non-Access Stratum (NAS) backoff timer arranged in the wireless terminal to suppress sending of a NAS request message, in which
the timer value is determined according to an external network with which the wireless terminal communicates through an radio access network and a core network.

### (Supplementary Note C12)

The method described in Supplementary Note C11, in which the timer value is determined to be a longer value in a case where the external network is a first network for low priority, compared with a case where the external network is not.

### (Supplementary Note C13)

The method described in Supplementary Note C12, in which the first network is a network associated with Machine Type Communication (MTC).

### (Supplementary Note C14)

The method described in any one of Supplementary Notes C11 to C13, in which the timer value is determined in accordance with a determination policy associated with the external network.

### (Supplementary Note C15)

The method described in Supplementary Note C14, in which the determination policy is selected from a plurality of policies including a first policy in which the timer value is set to be a predetermined fixed value and a second policy in which the timer value is randomly determined.

### (Supplementary Note C16)

A program for making a computer perform a method for congestion control, in which
the method includes notifying a wireless terminal of a timer value of a Non-Access Stratum (NAS) backoff timer arranged in the wireless terminal to suppress sending of a NAS request message, and in which
the timer value is determined according to an external network with which the wireless terminal communicates through a radio access network and a core network.

This application is based upon and claims the benefit of priority from Japanese Patent Application No. 2012-161408 filed on July 20, 2012, and the disclosure of which is incorporated herein in its entirety by reference.

### Reference Signs List

- 20: RADIO ACCESS NETWORK (RAN)
- 30: MOBILE CORE NETWORK (MCN)
- 40: EXTERNAL NETWORK
- 100: WIRELESS TERMINAL
- 101: WIRELESS TRANSCEIVER
- 102: CONTROL UNIT
- 110: NAS BACKOFF TIMER
- 200: BASE STATION
- 300: MOBILITY MANAGEMENT NODE
- 301: TIMER VALUE DETERMINATION UNIT
- 302: TIMER VALUE NOTIFICATION UNIT
- 310: TRANSFER NODE
- 320: SUBSCRIBER SERVER

## Claims

1. A core network node comprising notification means for notifying a wireless terminal of a timer value of a Non-Access Stratum, NAS, backoff timer arranged in the wireless terminal to suppress sending of a NAS request message,
wherein the timer value is determined based on software information that indicates software installed in the wireless terminal or indicates a version or a revision of the software.

2. The core network node according to Claim 1, wherein the software information is sent from the wireless terminal to a core network.

3. The core network node according to Claim 1 or 2, wherein the software information includes a Software Version Number, SVN, contained in an International Mobile Equipment Identity Software Version, IMEISV.

4. The core network node according to any one of Claims 1 to 3, wherein the timer value is determined in accordance with a determination policy associated with the software information.

5. The core network node according to Claim 4, wherein the determination policy is selected from a plurality of policies including a first policy in which the timer value is set to be a predetermined fixed value and a second policy in which the timer value is randomly determined.

6. The core network node according to any one of Claims 1 to 5, wherein the NAS request message includes at least one of a Service Request, a PDN Connectivity Request, a Bearer Resource Allocation Request, a Bearer Resource Modification Request, an Attach Request, and a Tracking Area Update Request.

7. A wireless terminal comprising control means for receiving a timer value which is determined based on software information that indicates software installed in the wireless terminal or indicates a version or a revision of the software, setting, based on the timer value, a Non-Access Stratum, NAS, backoff timer to suppress sending of a NAS request message, and activating the backoff timer.

8. The wireless terminal according to Claim 7, wherein the software information is sent from the wireless terminal to a core network.

9. The wireless terminal according to Claim 7 or 8, wherein the software information includes a Software Version Number, SVN, contained in an International Mobile Equipment Identity Software Version, IMEISV.

10. The wireless terminal according to any one of Claims 7 to 9, wherein the NAS request message includes at least one of a Service Request, a PDN Connectivity Request, a Bearer Resource Allocation Request, a Bearer Resource Modification Request, an Attach Request, and a Tracking Area Update Request.

11. A method for congestion control, comprising notifying a wireless terminal of a timer value of a Non-Access Stratum, NAS, backoff timer arranged in the wireless terminal to suppress sending of a NAS request message,
wherein the timer value is determined based on software information that indicates software installed in the wireless terminal or indicates a version or a revision of the software.

12. The method according to Claim 11, wherein the software information is sent from the wireless terminal to a core network.

13. The method according to Claim 11 or 12, wherein the software information includes a Software Version Number, SVN, contained in an International Mobile Equipment Identity Software Version, IMEISV.

14. The method according to any one of Claims 11 to 13, wherein the timer value is determined in accordance with a determination policy associated with the software information.

15. The method according to Claim 14, wherein the determination policy is selected from a plurality of policies including a first policy in which the timer value is set to be a predetermined fixed value and a second policy in which the timer value is randomly determined.

16. A non-transitory computer-readable medium storing a program for causing a computer to perform a method for congestion control, wherein
the method includes notifying a wireless terminal of a timer value of a Non-Access Stratum, NAS, backoff timer arranged in the wireless terminal to suppress sending of a NAS request message, and
the timer value is determined based on software information that indicates software installed in the wireless terminal or indicates a version or a revision of the software.
